# FASCICULE DE BREVET EUROPEEN

(11) **EP 2 327 541 B1**
(45) Date de publication et mention de la délivrance du brevet: **07.05.2014**
(21) Numéro de dépôt: 09290884.7
(22) Date de dépôt: 25.11.2009
(51) Int. Cl.: B32B 7/06, B32B 7/12, B32B 15/00, F16B 43/00

(54) **Cale d'épaisseur et procédé de fabrication de ladite cale d'épaisseur**
Unterlegkeil und Herstellungsverfahren eines solchen Unterlegkeils
Spacer and method for manufacturing said spacer

(43) Date de publication de la demande: 01.06.2011
(73) Titulaire: Gastel, Daniel André, 78370 Plaisir les Gatines (FR)
(72) Inventeur: Gastel, Daniel André, 78370 Plaisir les Gatines (FR)
(74) Mandataire: Thinat, Michel

(56) Documents cités:
- EP-A1- 0 667 233
- US-A1- 2008 081 141

## Description

L'invention concerne en général les cales d'épaisseur.

Plus précisément, l'invention concerne, selon un premier aspect, un produit stratifié présentant une épaisseur réglable par délitage, ce produit comprenant un empilement de feuilles présentant chacune une résistance intrinsèque au déchirement, et adhérant l'une à l'autre par une force de liaison plus faible que la résistance des feuilles au déchirement, ce dont il résulte que chaque feuille peut être détachée de l'empilement sans se déchirer.

Des produits de ce type sont enseignés dans le brevet d'invention FR2831095B1, et sont notamment utilisés comme cales de réglage pour des ensembles mécaniques. Ces ensembles mécaniques présentent généralement des jeux importants en certains points, résultant de la combinaison des tolérances de fabrication. Ces jeux sont compensés en insérant des cales.

Le document EP0667233 divulgue un produit composite pelable et son application à la fabrication de cales pelables. Des lamelles pelables sont adhérisées l'une à l'autre par une pellicule de matériau liant en permettant la séparation.

Le document US2008/0081141 divulgue un produit constitué d'une pile de feuilles alternées avec des couches de matériau adhésif. Chaque feuille a une résistance intrinsèque au déchirement et chaque couche connecte deux feuilles adjacentes avec une force de liaison inférieure à la résistance des feuilles au déchirement de sorte qu'il est possible de détacher des feuilles de la pile sans les déchirer.

L'épaisseur de ces cales est ajustée en retirant les feuilles avant ou arrières une à une, jusqu'à ce que l'épaisseur recherchée soit atteinte.

Ces cales sont notamment utilisées dans des industries où aucune perte de cale dans l'ensemble mécanique n'est tolérable, pour des raisons de sécurité ou d'assurance qualité. C'est le cas par exemple des mâts d'accrochage de moteurs d'avions dans l'industrie aéronautique. Pour résorber le jeu entre deux pièces, on insère une cale entre elles avant de les serrer. Lorsque les pièces à caler ont des surfaces en regard l'une de l'autre qui ne sont pas horizontale, il est utile de faciliter une tenue en place de la cale jusqu'au serrage en cas de montage ou après desserrage en cas de démontage.

On connaît dans l'aéronautique des moyens pour retenir une cale jusqu'au montage final. Par exemple, le document WO2007/068949 enseigne de mettre un ruban adhésif sur la cale d'épaisseur qui est ensuite enlevé. Cette solution convient pour des carénages d'ailes d'avion. Cependant dans d'autres parties de l'avion, la surépaisseur du ruban adhésif ou sa tenue en température ne conviennent pas. Pour enlever le ruban adhésif, il est nécessaire d'enlever la cale et il existe alors une plage temporelle dans laquelle la cale risque de tomber avant serrage définitif des pièces.

Dans d'autres domaines technologiques tels que le bâtiment, le document EP0362749 divulgue une cale retenue à la verticale à partir du sommet d'un châssis de fenêtre par une fixation angulaire réalisée d'une seule pièce avec la cale. Ce type de réalisation convient dans le domaine du bâtiment où on rencontre essentiellement deux types de surfaces, les surfaces verticales et les surfaces horizontales. Il ne convient pas dans le domaine de la mécanique de précision où on peut rencontrer un large éventail de surfaces obliques entre l'horizontale et la verticale. Le matériau de la cale de l'art antérieur est approprié pour subir une déformation plastique au pliage de façon à réaliser la fixation angulaire mais un matériau stratifié est mieux approprié pour des tolérances de calage très précises. Malheureusement, les matériaux stratifiés pose le problème de résistance au pliage qui conduit à une rupture si on dépasse les limites élastiques car, généralement, le maintien des feuilles entre elles ne permet pas d'entrer dans le domaine des déformations plastique.

Pour remédier aux problèmes posés par l'état antérieur de la technique, l'invention a pour objet une cale d'épaisseur comprenant plusieurs feuilles de métal séparées l'une de l'autre par un film de résine qui confère à la cale une force de cohésion entre feuilles ayant :
- un module qui est supérieure à une valeur minimale de maintien de la cale rigide dans un plan,
- une composante perpendiculaire au dit plan, inférieure à une première valeur maximale qui permet de peler l'une des feuilles à laquelle on applique une force de séparation supérieure à ladite première valeur maximale, et
- au moins une composante dans ledit plan, inférieure à une deuxième valeur maximale qui permet de faire glisser les feuilles les unes sur les autres lorsqu'on applique à la cale une force de cisaillement supérieure à ladite deuxième valeur maximale,
ladite cale d'épaisseur comprenant au moins une extrémité qui sort du plan sous forme d'une patte d'accroche.

De préférence, ladite résine est à un état final de polymérisation.

Particulièrement, le film de résine comporte une épaisseur infinitésimale.

Selon différents modes de réalisation possibles, la résine est une résine du type appartenant à la famille des résines thermodurcissables ou à la famille des résines thermoplastiques.

L'invention a aussi pour objet un procédé d'utilisation de cale d'épaisseur pour caler une deuxième pièce comportant une deuxième surface non horizontale sur une première pièce comportant une première surface non horizontale, comprenant des étapes consistant à :
- prendre une cale d'épaisseur comprenant plusieurs feuilles de métal séparées l'une de l'autre par un film de résine qui confère à la cale une force de cohésion entre feuilles ayant un module qui est supérieure à une valeur minimale de maintien de la cale rigide dans un plan et une composante perpendiculaire au dit plan inférieure à une première valeur maximale qui permet de peler l'une des feuilles à laquelle on applique une force de séparation supérieure à ladite première valeur maximale, ladite cale d'épaisseur comprenant en outre au moins une extrémité qui sort du plan sous forme d'une patte d'accroche;
- arracher successivement une ou plusieurs feuilles sur une face jusqu'à obtenir une épaisseur de cale qui convient au calage ;
- placer la cale d'épaisseur sur la première surface de façon à ce que la patte maintienne la cale d'épaisseur sur la première pièce ;
- approcher la deuxième pièce de la première pièce contre la cale d'épaisseur.

L'invention a encore pour objet un procédé de fabrication d'une cale d'épaisseur, comprenant des étapes dans lesquelles :
- on prépare une solution liquide comprenant une résine non polymérisée et du solvant en surabondance ;
- on enduit plusieurs feuilles de métal avec ladite solution liquide de façon à constituer un film de résine sur au moins une face de feuille;
- on empile les feuilles de métal de façon à les séparer les unes des autres par ledit film de résine ; et
- on amène la résine à un état de polymérisation qui confère à la cale une force de cohésion entre feuilles ayant un module qui est supérieure à une valeur minimale de maintien de la calle rigide dans un plan, une composante perpendiculaire au dit plan, inférieure à une première valeur maximale qui permet de peler l'une des feuilles à laquelle on applique une force de séparation supérieure à ladite première valeur maximale, et au moins une composante dans ledit plan, inférieure à une deuxième valeur maximale qui permet de faire glisser les feuilles les unes sur les autres lorsqu'on applique à la cale une force de cisaillement supérieure à ladite deuxième valeur maximale.

Le procédé de fabrication comprend après obtention de ladite force de cohésion entre feuilles, une étape dans laquelle on coince au moins une extrémité de ladite cale dans un outil sans la serrer et on applique à la calle une force de cisaillement qui fait glisser les feuilles les unes sur les autres de façon à faire sortir du plan ladite extrémité sous forme d'une patte d'accroche.

Particulièrement, pour appliquer à la cale ladite force de cisaillement, on exerce un effort de cintrage sur une partie de la calle différente de ladite extrémité.

De préférence, ledit état de polymérisation de la résine est un état final de polymérisation.

Particulièrement, pour préparer ladite solution liquide, on ajoute du solvant dans une proportion supérieure à 20% de la solution de façon à disperser la résine pour obtenir une épaisseur infinitésimale du film de résine.

Plus particulièrement, pour préparer ladite solution liquide, on ajoute du solvant dans une proportion inférieure ou égale à 40% de la solution.

Dans un mode de réalisation préférée, la résine est une résine du type appartenant à la famille des résines thermodurcissables.

Plus particulièrement, pour polymériser la résine, on amène la cale à une température comprise entre 170°C et 180°C.

Dans un mode de réalisation alternatif, la résine est une résine du type appartenant à la famille des résines thermoplastiques.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'un produit stratifié conforme à l'invention,
- les figures 2 à 4 sont des vues en perspective de différents modes possibles de réalisation de cales d'épaisseur utilisant le produit stratifié conforme à l'invention,
- la figure 5 montre un exemple d'utilisation d'une cale conforme à l'invention,
- les figures 6 et 7 montrent une étape de pliage d'un procédé de fabrication conforme à l'invention.

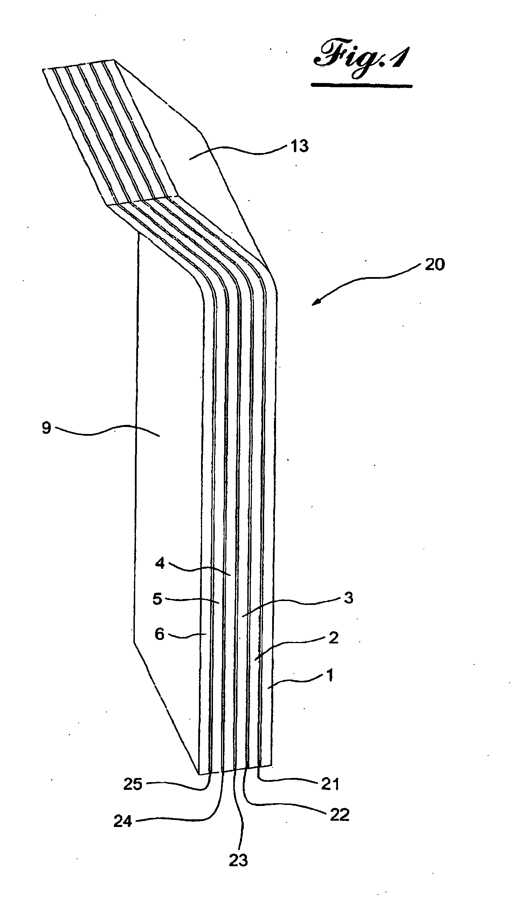

En référence à la figure 1, une cale d'épaisseur 20 comprend plusieurs feuilles 1, 2, 3, 4, 5, 6. Ici seulement six feuilles sont représentées à titre purement illustratif mais on comprendra aisément que la quantité de feuilles superposées, est généralement nettement supérieure à six. Les feuilles sont en métal tel que l'acier, de préférence inoxydable, ou l'aluminium, sélectionnées pour leur qualité de résistance à la compression en vue de garantir une épaisseur constante de feuille, pour leur qualité de résistance à la traction en vue de garantir une résistance élevée au déchirement et pour leur compatibilité avec les autres matériaux de construction de l'appareil dans lequel la cale d'épaisseur est appelée à être utilisée.

On rappelle encore que les feuilles sont enduites d'une résine dont une polymérisation finale en maintenant les feuilles serrées les unes contre les autres, permet de procurer au moins deux effets techniques majeurs. Un premier effet est de maintenir les feuilles liées entre elles avec une force d'adhérence suffisamment élevée pour assurer une cohésion suffisante du produit stratifié et suffisamment basse pour permettre un arrachement volontaire de feuilles une à une sans déchirement, en d'autres termes un maintien ou un arrachement de chaque feuille dans son intégralité. Un deuxième effet est d'offrir une certaine résistance au cisaillement entre feuilles. Cette résistance au cisaillement, en s'opposant aux glissement des feuilles les unes sur les autres, en combinaison avec les qualités de résistance à la traction du métal, s'oppose au cintrage (bending en anglais) du produit stratifié en vue de garantir une planéité parfaite.

Le premier effet technique est primordial dans les applications de calage de haute précision car l'arrachage de chaque feuille garantit une diminution d'épaisseur égale à l'épaisseur d'une feuille. Un nombre initial de feuilles donnant une épaisseur initiale connue, un nombre final de feuilles donne une épaisseur finale qu'il est possible de déterminer avec précision.

Le deuxième effet technique est tout aussi primordial que le premier car on conçoit aisément qu'un défaut de planéité provoquerait des écarts entre les sommets des courbes qui iraient au-delà de l'épaisseur obtenue par accumulation des épaisseurs de feuilles.

Cependant le maintien rigide d'une face de la cale d'épaisseur dans un plan, indispensable pour le calage de pièces à surfaces de contact planes, a pour contre partie de ne pas permettre un pliage par déformation plastique en vue de créer une patte d'accroche. Lorsqu'on détache la feuille 1 de la face avant, il devient possible de plier individuellement la partie détachée de cette feuille car elle n'est plus retenue en glissement par une autre feuille. Cependant le pliage obtenu d'une seule feuille après détachement de la cale, ne permet pas une fonction d'accrochage comme le permettrait une déformation plastique de l'ensemble de la cale. L'invention a pour but d'obtenir un pliage comparable à celui qu'il est possible d'obtenir avec une cale d'épaisseur réalisée en acier comme c'est par exemple le cas des calés constituées de lames pleines d'acier inoxydable de type AISI 304 qui sont utilisées pour caler des pièces en acier.

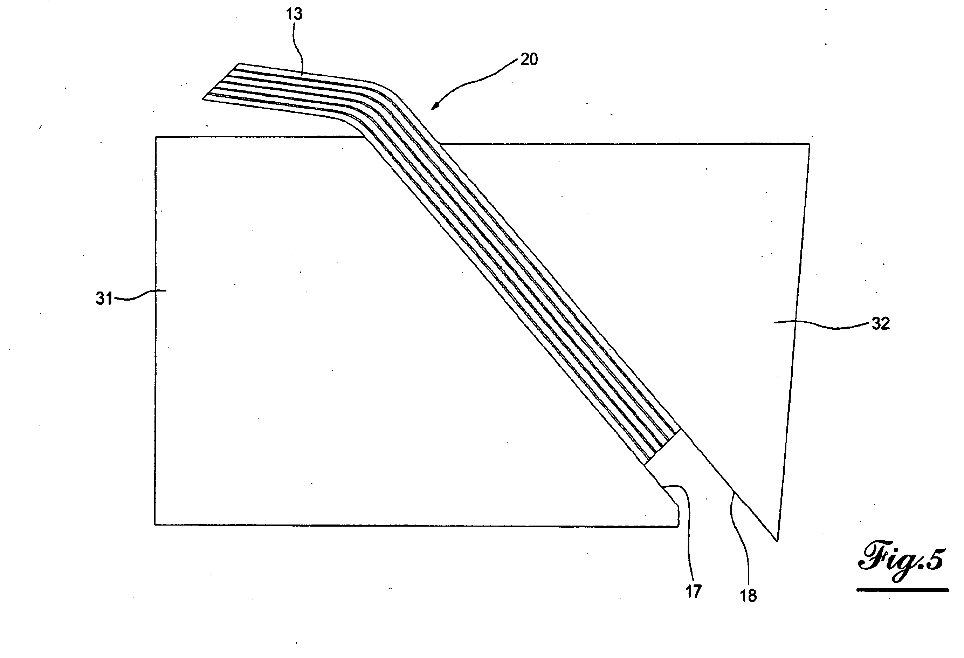

On explique à présent, un procédé de fabrication d'une cale d'épaisseur 20 pour caler une deuxième pièce 32 comportant une deuxième surface 18 non horizontale sur une première pièce 31 comportant une première surface 17 non horizontale, telles que représentées en figure 5.

Dans une première étape, on prépare une solution liquide comprenant une résine non polymérisée à laquelle on ajoute du solvant en surabondance. Les quantités de solvant ajoutées habituellement, varient généralement de 15 à 20% pour faciliter une enduction de feuilles par des rouleaux encreurs comme dans une machine offset, par pulvérisation ou par trempage dans un bain. La surabondance a lieu dès qu'on on ajoute du solvant dans une proportion supérieure à 20% de la solution avec pour effet de disperser la résine. Pour obtenir une dispersion plus conséquente de la résine, on peut aller jusqu'à 40% sans pénaliser la polymérisation de la résine que l'on effectuera ensuite. On peut aussi légèrement dépasser la valeur haute pour tenir compte d'une évaporation du solvant avant les étapes suivante, notamment avant l'étape de polymérisation. Le type de solvant est adapté à la résine. L'acétone se révèle être un solvant très efficace, notamment pour une résine appartenant à la famille des thermodurcissables tels que, plus particulièrement les résines époxydes. Pour remédier au caractère incommodant des vapeurs d'acétone, on peut utiliser d'autres solvants ou travailler sous hôte aspirante. Pour des résines appartenant à la famille des thermoplastiques, on peut utiliser des solvants adaptés tels que préconisés par les fournisseurs de résine.

Dans une deuxième étape, on enduit plusieurs feuilles 1, 2, 3, 4, 5 de métal avec la solution liquide obtenue dans l'étape précédente de façon à constituer un film de résine sur au moins une face de feuille, par exemple par rouleau encreur ou sur les deux faces par trempage. Comme indiqué ci-dessus, plusieurs types de métal conviennent selon l'usage attendu, notamment parmi les aciers inoxydables pour leur qualité de tenue dans le temps et leur excellente qualité de surface que l'on exigera la plus lisse possible. La forte dispersion de résine dans la solution riche en solvant, permet d'obtenir une épaisseur infinitésimale de film de résine sur les feuilles, pouvant être réduite à une échelle moléculaire des monomères ou oligomères constituant la résine, juste suffisante pour permettre une polymérisation ultérieure.

Dans une troisième étape, on empile les feuilles 1, 2, 3, 4, 5 auxquelles on superpose éventuellement une dernière feuille 6 non enduite sur une face libre enduite de la feuille 5. Les références 1 à 6 sont ici purement illustrative. Le nombre de feuilles de métal est généralement bien supérieur à six de façon à obtenir une calle d'épaisseur variant de 1 à 2 mm ou plus. De la sorte les feuilles sont séparées l'une de l'autre par un film de résine 21, 22, 23, 24, 25. Les feuilles sont ensuite pressées les unes contre les autres, favorisant une évacuation d'un éventuel surplus résiduel de la solution liquide de sorte que les faces en regard de deux feuilles métalliques successives sont très proches l'une de l'autre.

Dans une troisième étape, on amène la résine à un état de polymérisation qui confère à la cale une force de cohésion entre feuilles ayant un module qui est supérieure à une valeur minimale de maintien de la cale rigide dans un plan. Ce module peut dans certains cas être obtenu avec un état de polymérisation partielle. Un état de polymérisation totale, en augmentant la force de cohésion, renforce la rigidité planaire de la cale.

Le degré de polymérisation est sélectionné pour obtenir une composante de la force de cohésion qui est perpendiculaire au plan, inférieure à une première valeur maximale qui permet de peler l'une des feuilles à laquelle on applique une force de séparation supérieure à ladite première valeur maximale. La faible épaisseur du film de résine permet de pousser le degré de polymérisation jusqu'à un état de polymérisation totale en maintenant la composante perpendiculaire à la première valeur maximale qui permet de peler l'une des feuilles à laquelle on applique une force de séparation supérieure à ladite première valeur maximale. L'avantage de l'état de polymérisation total ou final, est d'être stable et de conserver ainsi ses propriétés dans le temps.

Le degré de polymérisation est aussi sélectionné pour obtenir une composante de la force de cohésion qui est dans le plan, inférieure à une deuxième valeur maximale qui permet de faire glisser les feuilles les unes sur les autres lorsqu'on applique à la cale une force de cisaillement supérieure à la deuxième valeur maximale. Le glissement recherché est celui qui s'apparente à une déformation plastique dans un milieu continu soumis à une contrainte de cisaillement, c'est-à-dire hors du domaine élastique. Une polymérisation incomplète favorise bien entendu le glissement mais il convient aussi qu'aucun glissement ne se produise pour une force de cisaillement qui ne s'apparente pas à une contrainte de déformation plastique car il faut garder une certaine rigidité de la cale. Le film de résine est suffisamment fin pour permettre un glissement de feuille à l'interface du film de résine avec la feuille métallique sans rupture du film de résine, y compris dans l'état totalement polymérisé qui est favorable à la stabilité des propriétés de la cale.

C'est pourquoi on préfère un état final de polymérisation dans lequel la polymérisation totale de la résine offre de bonnes qualités de stabilité. Pour polymériser totalement la résine lorsqu'elle est du type appartenant à la famille des résines thermodurcissables, on amène la cale, ou de manière plus général le produit stratifié obtenu par les étapes précédentes, à une température comprise entre 170°C et 180°C. La durée de maintien en température varie de 1 à 7 heures suivant le type de résine utilisée.

Une résine du type appartenant à la famille des résines thermoplastiques permet éventuellement de revenir dans un domaine plastique favorable à un glissement contrôlé par réchauffage après polymérisation totale.

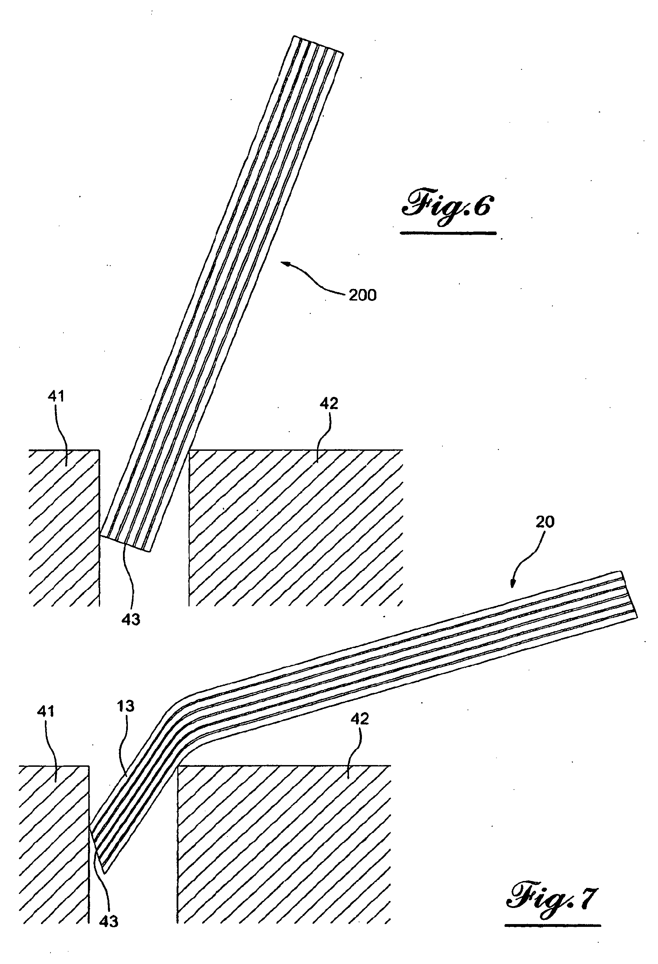

Dans une quatrième étape, après obtention de la force de cohésion entre feuilles aux valeurs souhaitées, on applique au produit stratifié 200 obtenu en fin d'étape précédente une force de cisaillement qui fait glisser les feuilles les unes sur les autres de façon à faire sortir du plan, une extrémité 43 sous forme d'une patte d'accroche 13. Un mode d'exécution de la quatrième étape est illustré par les figures 6 et 7.

En référence à la figure 7, on coince une extrémité 43 du produit stratifié 200 entre deux blocs 41, 42 d'un outil sans la serrer de façon à permettre un glissement des feuilles l'une sur l'autre sans rupture comme on l'obtiendrait par pliage en déformation plastique dans un milieu continu uniforme.

En référence à la figure 8, pour appliquer la force de cisaillement, on exerce un effort de cintrage sur une partie de la cale différente de ladite extrémité, ici par exemple sur une extrémité du produit stratifié 200 qui devient alors une cale 20 comprenant une patte d'accroche 13, l'extrémité 43 étant retenue par le bloc 41. Le pliage est effectué avec un rayon de courbure compris entre 1,3 et 1, 5 mm. On a remarqué que ces valeurs de rayon de courbure donnaient de bonnes caractéristiques d'accroche sans provoquer de cassure ni de retour élastique.

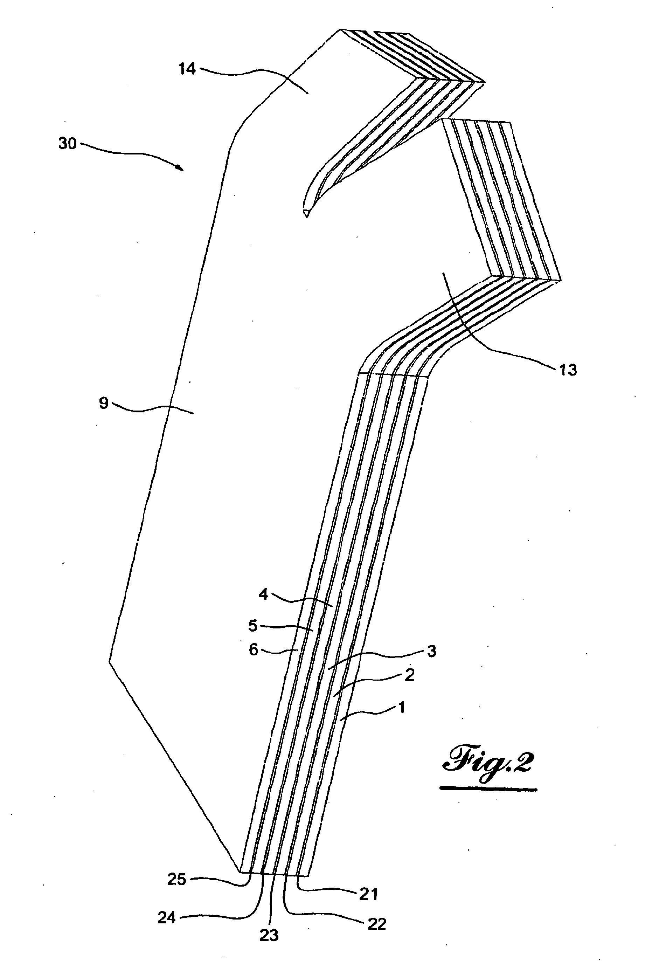

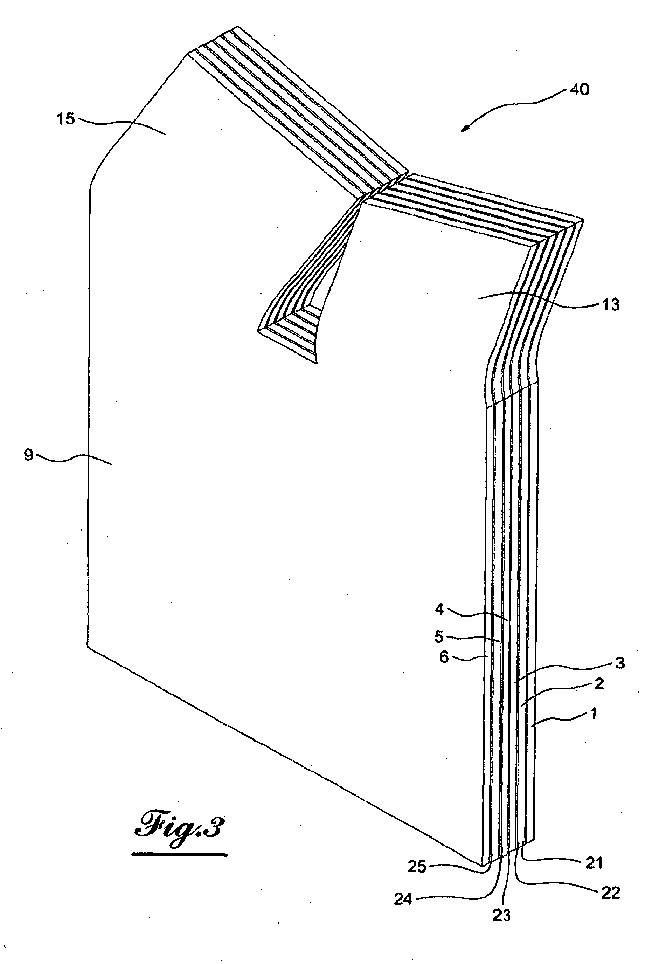

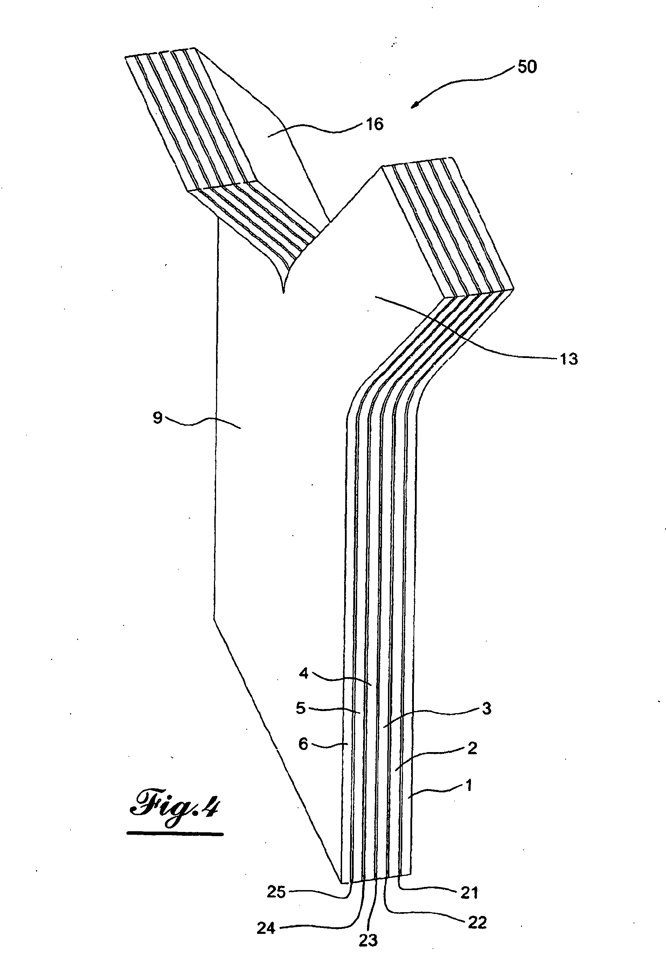

Le procédé qui vient d'être expliqué permet d'obtenir des cales d'épaisseurs aux formes multiples comme par exemple la cale 30 illustrée sur la figure 2 avec une deuxième patte d'accroche 14 pliée dans le même sens que la patte 13, la cale 40 illustrée sur la figure 3 avec une deuxième patte d'accroche 15 pliée dans le même sens que la patte 13 et qui s'en rapproche, ou la cale 50 illustrée sur la figure 4 avec une deuxième patte d'accroche 16 pliée dans un sens opposé à celui de la patte 13.

On explique à présent une utilisation de la cale 20 dans un procédé de calage d'une pièce 32 comportant une surface 18 non horizontale sur une pièce 31 comportant elle aussi une surface 17 non horizontale.

On prend la cale d'épaisseur 20, 30, 40, 50 qui convient en fonction de l'usage attendu avec la patte 13 qui sort du plan en extrémité de la face avant. La patte 13 a une épaisseur qui correspond au nombre de feuilles 1, 2, 3, ... de la cale. De la sorte, la patte 13 reproduit l'intégralité de l'épaisseur d'une cale 20, 30, 40, 50 standard.

On arrache successivement une ou plusieurs feuilles 6, 5, 4, 3 sur une face 9, jusqu'à obtenir une épaisseur de cale qui convient au calage.

En référence à la figure 5, on place la cale d'épaisseur 20 sur la surface 17 de la pièce 31 de façon à ce que la patte 13 maintienne la cale d'épaisseur 20 sur la première pièce 31, ici par accrochage sur la face supérieure de la pièce 31. Une perte de la cale dans la structure mécanique à monter serait fort ennuyeuse, particulièrement lorsque la structure mécanique comprend un mât d'accrochage de moteur sur une aile d'avion. La patte d'accrochage évite à la cale 20, 30, 40, 50, de glisser le long de la surface 17 et de tomber dans les tréfonds de la structure mécanique.

On approche ensuite la pièce 32 de la première pièce 31 contre la cale d'épaisseur 20, 30, 40, 50.

## Revendications

1. Cale d'épaisseur (20, 30, 40) comprenant plusieurs feuilles (1, 2, 3, 4, 5) de métal séparées l'une de l'autre par un film (21, 22, 23, 24, 25) de résine qui confère à la cale une force de cohésion entre feuilles ayant :
- un module qui est supérieure à une valeur minimale de maintien de la cale rigide dans un plan,
- une composante perpendiculaire au dit plan, inférieure à une première valeur maximale qui permet de peler l'une des feuilles à laquelle on applique une force de séparation supérieure à ladite première valeur maximale, et
- au moins une composante dans ledit plan, inférieure à une deuxième valeur maximale qui permet de faire glisser les feuilles les unes sur les autres lorsqu'on applique à la cale une force de cisaillement supérieure à ladite deuxième valeur maximale,
**caractérisée en ce qu'**elle comprend au moins une extrémité qui sort du plan sous forme d'une patte d'accroche (13, 14, 15).

2. Cale d'épaisseur selon la revendication 1, **caractérisée en ce que** ladite résine est à un état final de polymérisation.

3. Cale d'épaisseur selon l'une des revendications précédentes, **caractérisée en ce que** le film de résine comporte une épaisseur infinitésimale.

4. Cale d'épaisseur selon l'une des revendications précédentes, **caractérisée en ce que** la résine est une résine du type appartenant à la famille des résines thermodurcissables.

5. Cale d'épaisseur selon l'une des revendications précédentes, **caractérisée en ce que** la résine est une résine du type appartenant à la famille des résines thermoplastiques.

6. Procédé de calage d'une deuxième pièce (32) comportant une deuxième surface (18) non horizontale sur une première pièce (31) comportant une première surface (17) non horizontale, comprenant des étapes consistant à :
- prendre une cale d'épaisseur (20, 30, 40) comprenant plusieurs feuilles (1, 2, 3, 4, 5, 6) de métal séparées l'une de l'autre par un film de résine qui confère à la cale une force de cohésion entre feuilles ayant un module qui est supérieure à une valeur minimale de maintien de la cale rigide dans un plan et une composante perpendiculaire au dit plan inférieure à une première valeur maximale qui permet de peler l'une des feuilles à laquelle on applique une force de séparation supérieure à ladite première valeur maximale, ladite cale d'épaisseur comprenant en outre au moins une extrémité qui sort du plan sous forme d'une patte d'accroche (13);
- arracher successivement une ou plusieurs feuilles (6, 5, 4) sur une face (9) jusqu'à obtenir une épaisseur de cale qui convient au calage ;
- placer la cale d'épaisseur (20, 30, 40) sur la première surface (17) de façon à ce que la patte (13) maintienne la cale d'épaisseur (20) sur la première pièce (31) ;
- approcher la deuxième pièce (32) de la première pièce (31) contre la cale d'épaisseur (20).

7. Procédé de fabrication d'une cale d'épaisseur (20, 30, 40), comprenant des étapes dans lesquelles :
- on prépare une solution liquide comprenant une résine non polymérisée et du solvant en surabondance ;
- on enduit plusieurs feuilles (1, 2, 3, 4, 5) de métal avec ladite solution liquide de façon à constituer un film de résine sur au moins une face de feuille;
- on empile les feuilles (1, 2, 3, 4, 5) de métal de façon à les séparer les unes des autres par ledit film de résine ; et
- on amène la résine à un état de polymérisation qui confère à la cale une force de cohésion entre feuilles ayant un module qui est supérieure à une valeur minimale de maintien de la cale rigide dans un plan, une composante perpendiculaire au dit plan, inférieure à une première valeur maximale qui permet de peler l'une des feuilles à laquelle on applique une force de séparation supérieure à ladite première valeur maximale, et au moins une composante dans ledit plan, inférieure à une deuxième valeur maximale qui permet de faire glisser les feuilles les unes sur les autres lorsqu'on applique à la cale une force de cisaillement supérieure à ladite deuxième valeur maximale,
**caractérisée en ce que** le procédé comprend après obtention de ladite force de cohésion entre feuilles, une étape dans laquelle on coince au moins une extrémité (43) de ladite cale dans un outil (41, 42) sans la serrer et on applique à la cale (20, 30, 40) une force de cisaillement qui fait glisser les feuilles les unes sur les autres de façon à faire sortir du plan ladite extrémité sous forme d'une patte d'accroche (13).

8. Procédé de fabrication selon la revendication 7, **caractérisé en ce que**, pour appliquer à la cale (20, 30, 40) ladite force de cisaillement, on exerce un effort de cintrage sur une partie de la cale différente de ladite extrémité.

9. Procédé de fabrication selon l'une des revendications 7 à 8, **caractérisée en ce que** ledit état de polymérisation de la résine est un état final de polymérisation.

10. Procédé de fabrication selon l'une des revendications 7 à 9, **caractérisée en ce que**, pour préparer ladite solution liquide, on ajoute du solvant dans une proportion supérieure à 20% de la solution de façon à disperser la résine pour obtenir une épaisseur infinitésimale du film de résine.

11. Procédé de fabrication selon la revendication 10, **caractérisée en ce que**, pour préparer ladite solution liquide, on ajoute du solvant dans une proportion inférieure ou égale à 40% de la solution.

12. Procédé de fabrication selon l'une des revendications 7 à 11, **caractérisée en ce que** la résine est une résine du type appartenant à la famille des résines thermodurcissables.

13. Procédé de fabrication selon la revendication 12, **caractérisée en ce que**, pour polymériser la résine, on amène la cale à une température comprise entre 170°C et 180°C.

14. Procédé de fabrication selon l'une des revendications 7 à 11, **caractérisée en ce que** la résine est une résine du type appartenant à la famille des résines thermoplastiques.

## Patentansprüche

1. Unterlegekeil (20, 30, 40), der mehrere Metallschichten (1, 2, 3, 4, 5) umfasst, die durch einen Harzfilm (21, 22, 23, 24, 25) voneinander getrennt sind, der dem Keil eine Kohäsionskraft zwischen den Schichten verleiht, der hat:
- ein Modul, das größer ist als ein minimaler Haltewert des starren Keils in einer Ebene,
- eine lotrechte Komponente zu der Ebene, die kleiner ist als ein erster maximaler Wert, der erlaubt, eine der Schichten abzuschälen, auf die eine Trennkraft ausgeübt wird, die größer ist als der erste maximale Wert, und
- mindestens eine Komponente in der Ebene, die kleiner ist als ein zweiter maximaler Wert, der erlaubt, die Schichten übereinander gleiten zu lassen, wenn auf den Keil eine Scherkraft ausgeübt wird, die größer ist als der maximale Wert,
**dadurch gekennzeichnet, dass** er mindestens ein Ende umfasst, das aus der Ebene in Form eines Klemmfußes (13, 14, 15) hervortritt.

2. Unterlegekeil nach Anspruch 1, **dadurch gekennzeichnet, dass** das Harz in einem Polymerisations-Endzustand ist.

3. Unterlegekeil nach einem der vorangehenden Ansprüche, **dadurch gekennzeichnet, dass** der Harzfilm eine unendlich kleine Dicke aufweist.

4. Unterlegekeil nach einem der vorangehenden Ansprüche, **dadurch gekennzeichnet, dass** das Harz ein Harz der Art ist, die zur Familie der duroplastischen Harze gehört.

5. Unterlegekeil nach einem der vorangehenden Ansprüche, **dadurch gekennzeichnet, dass** das Harz ein Harz der Art ist, die zur Familie der thermoplastischen Harze gehört.

6. Verkeilungsverfahren eines zweiten Teils (32), das eine zweite, nicht waagerechte Fläche (18) auf einem ersten Teil (31) aufweist, das eine erste, nicht horizontale Fläche (17) aufweist, das die Schritte umfasst, die darin bestehen:
- Bereitstellen eines Unterlegekeils (20, 30, 40), der mehrere Metallschichten (1, 2, 3, 4, 5, 6) umfasst, die durch einen Harzfilm voneinander getrennt sind, der dem Keil eine Kohäsionskraft zwischen den Schichten verleiht, mit einem Modul, das größer ist als ein minimaler Haltewert des starren Keils in einer Ebene und einer lotrechten Komponente zu der Ebene, die kleiner ist als ein erster maximaler Wert, der erlaubt, eine der Schichten abzuschälen, auf die eine Trennkraft ausgeübt wird, die größer ist als der erste maximale Wert, wobei der Unterlegekeil mindestens ein Ende umfasst, das aus der Ebene in Form eines Klemmfußes (13) hervortritt,
- schrittweises Entfernen einer oder mehrerer Schichten (6, 5, 4) auf einer Seite (9) bis zum Erhalt einer Keildicke, die der Verkeilung entspricht,
- Platzieren des Unterlegekeils (20, 30, 40) auf die erste Fläche (17) derart, dass der Fuß (13) den Unterlegekeil (20) auf dem ersten Teil (31) hält,
- Annähern des zweiten Teils (32) an den ersten Teil (31) gegen den Unterlegekeil (20).

7. Herstellungsverfahren eines Unterlegekeils (20, 30, 40), das die Schritte umfasst, bei denen:
- eine flüssige Lösung zubereitet wird, die ein nicht polymerisiertes Harz und Lösungsmittel im Überfluss umfasst,
- mehrere Metallschichten (1, 2, 3, 4, 5) mit der flüssigen Lösung derart beschichtet werden, dass auf mindestens einer Schichtseite ein Harzfilm gebildet wird,
- die Metallschichten (1, 2, 3, 4, 5) derart gestapelt werden, dass die voneinander von dem Harzfilm getrennt sind, und
- das Harz in einen Polymerisationszustand geführt wird, der dem Keil eine Kohäsionskraft zwischen den Schichten verleiht mit einem Modul, das größer ist als ein minimaler Haltewert des starren Keils in einer Ebene, einer lotrechte Komponente zu der Ebene, die kleiner ist als ein erster maximaler Wert, der erlaubt, eine der Schichten abzuschälen, auf die eine Trennkraft ausgeübt wird, die größer ist als der erste maximale Wert, und mindestens einer Komponente in der Ebene, die kleiner ist als ein zweiter maximaler Wert, der erlaubt, die Schichten übereinander gleiten zu lassen, wenn auf den Keil eine Scherkraft ausgeübt wird, die größer ist als der maximale Wert,
**dadurch gekennzeichnet, dass** das Verfahren nach Erhalt der Kohäsionskraft zwischen den Schichten einen Schritt umfasst, bei dem mindestens ein Ende (43) des Keils in ein Werkzeug (41, 42) geklemmt wird, ohne es zu spannen, und auf den Keil (20, 30, 40) eine Scherkraft ausgeübt wird, die bewirkt, dass die Schichten übereinander derart gleiten, dass aus der Ebene das Ende in Form eines Klemmfußes (13) heraustritt.

8. Herstellungsverfahren nach Anspruch 7, **dadurch gekennzeichnet, dass**, um auf den Keil (20, 30, 40) die Scherkraft anzuwenden, eine Biegekraft auf einen Teil des Keils angewendet wird, der sich von dem Ende unterscheidet.

9. Herstellungsverfahren nach einem der Ansprüche 7 bis 8, **dadurch gekennzeichnet, dass** der Polymerisationszustand des Harzes ein Polymerisations-Endzustand ist.

10. Herstellungsverfahren nach einem der Ansprüche 7 bis 9, **dadurch gekennzeichnet, dass**, um die flüssige Lösung zuzubereiten, Lösungsmittel in einem Verhältnis über 20 % der Lösung hinzugegeben wird, um das Harz zu dispergieren, um eine unendlich kleine Dicke des Harzfilms zu erhalten.

11. Herstellungsverfahren nach Anspruch 10, **dadurch gekennzeichnet, dass**, um die flüssige Lösung zuzubereiten, Lösungsmittel in einem Verhältnis kleiner oder gleich 40 % der Lösung hinzugegeben wird.

12. Herstellungsverfahren nach einem der Ansprüche 7 bis 11, **dadurch gekennzeichnet, dass** das Harz ein Harz der Art ist, die zur Familie der duroplastischen Harze gehört.

13. Herstellungsverfahren nach Anspruch 12, **dadurch gekennzeichnet, dass**, um das Harz zu polymerisieren, der Keil auf eine Temperatur zwischen 170 °C und 180 °C inklusive gebracht wird.

14. Herstellungsverfahren nach einem der Ansprüche 7 bis 11, **dadurch gekennzeichnet, dass** das Harz ein Harz der Art ist, die zur Familie der thermoplastischen Harze gehört.

## Claims

1. A spacer (20, 30, 40) comprising several sheets (1, 2, 3, 4, 5) of metal separated from one another by a film (21, 22, 23, 24, 25) of resin that gives the spacer a cohesion strength between the sheets having:
- a modulus greater than the minimum value for maintaining the rigid spacer in a plane,
- a component perpendicular to said plane, below a first maximum value that makes it possible to peel one of the sheets to which a separating force is applied greater than said first maximum value, and
- at least one component in said plane, below a second maximum value that makes it possible to slide the sheets on one another when a shear force is applied on the spacer greater than said second maximum value,
**characterized in that** it comprises at least one end that leaves the plane in the form of a fastening tab (13, 14, 15).

2. The spacer according to claim 1, **characterized in that** said resin is in a final polymerization state.

3. The spacer according to one of the preceding claims, **characterized in that** the resin film includes an infinitesimal thickness.

4. The spacer according to one of the preceding claims, **characterized in that** the resin is a resin of the type belonging to the family of thermosetting resins.

5. The spacer according to one of the preceding claims, **characterized in that** the resin is a resin of the type belonging to the family of thermoplastic resins.

6. A method for spacing a second part (32) including a second non-horizontal surface (18) on a first part (31) having a first non-horizontal surface (17), comprising steps consisting of:
- taking a spacer (20, 30, 40) comprising several sheets (1, 2, 3, 4, 5, 6) of metal separated from each other by a resin film that gives the spacer a cohesion force between sheets having a modulus greater than the minimum value for maintaining the rigid spacer in a plane and a component perpendicular to said plane below a first maximum value that makes it possible to peel one of the sheets to which a separating force is applied greater than said first maximum value, said spacer further comprising at least one end that leaves the plane in the form of a fastening tab (13);
- successively tearing away one or more sheets (6, 5, 4) on a face (9) until a spacer thickness is obtained that is suitable for the spacing;
- placing the spacer (20, 30, 40) on the first surface (17) such that the tab (13) maintains the spacer (20) on the first part (31);
- bringing the second part (32) closer to the first part (31) against the spacer (20).

7. A method for manufacturing a spacer (20, 30, 40), comprising the following steps:
- preparing a liquid solution comprising a non-polymerized resin and redundant solvent;
- coating several sheets (1, 2, 3, 4, 5) of metal with said liquid solution so as to form a resin film on at least one face of the sheets;
- stacking the sheets (1, 2, 3, 4, 5) of metal so as to separate them from each other using said resin film; and
- bringing the resin to a polymerization state that gives the spacer a cohesion force between sheets having a modulus above a minimum value for maintaining the rigid spacer in a plane, a component perpendicular to said plane, below a first maximum value that makes it possible to peel one of the sheets when a separating force is applied above said first maximum value, and at least one component in said plane, below a second maximum value that makes it possible to slide the sheets on one another when a shearing force is applied on the spacer greater than said second maximum value,
**characterized in that** the method comprises, after obtaining the cohesion force between sheets, a step in which at least one end (43) of said spacer is stuck in a tool (41, 42) without gripping it and a shearing force is applied to the spacer (20, 30, 40) that causes the sheets to slide on one another so as to cause said end in the form of a fastening tab (13) to leave the plane.

8. The manufacturing method according to claim 7, **characterized in that**, to apply said shearing force to the spacer (20, 30, 40), a sintering force is exerted on part of the spacer different from said end.

9. The manufacturing method according to one of claims 7 to 8, **characterized in that** said polymerization state of the resin is a final polymerization state.

10. The manufacturing method according to one of claims 7 to 9, **characterized in that**, to prepare said liquid solution, solvent is added in a proportion greater than 20% of the solution so as to disperse the resin to obtain an infinitesimal thickness of the resin film.

11. The method according to claim 10, **characterized in that**, to prepare said liquid solution, solvent is added in a proportion lower than or equal to 40% of the solution.

12. The manufacturing method according to one of claims 7 to 11, **characterized in that** the resin is a resin of the type belonging to the family of thermosetting resins.

13. The manufacturing method according to claim 12, **characterized in that**, to polymerize the resin, the spacer is brought to a temperature comprised between 170°C and 180°C.

14. The manufacturing method according to one of claims 7 to 12, **characterized in that** the resin is a resin of the type belonging to the family of thermoplastic resins.
